Europäisches Patentamt

**European Patent Office**

**Office européen des brevets**

(11) Publication number: **0 086 356**
**A1**

# EUROPEAN PATENT APPLICATION

(21) Application number: **83100600.2**

(22) Date of filing: **24.01.83**

(51) Int. Cl.³: **A 01 B 35/12**

(30) Priority: **25.01.82 DK 310/82**

(43) Date of publication of application: **24.08.83**
**Bulletin 83/34**

(84) Designated Contracting States: **AT BE CH DE FR GB IT LI LU NL SE**

(71) Applicant: **FLEMSTOFTE-MADS AMBY MASKINFABRIKER A/S, Sandvedvej 59 B, DK-4250 Fuglebjerg (DK)**

(72) Inventor: **Andersen, Tom Rudbeck, Tystrupvej 44, DK-4250 Fuglebjerg (DK)**

(74) Representative: **Vossius Vossius Tauchner Heunemann Rauh, Siebertstrasse 4 P.O. Box 86 07 67, D-8000 München 86 (DE)**

(54) **Elastic suspension of sectionalized implements for tilling the soil.**

(57) A sectionalized implement for tilling soil comprises a main frame (1) on which the tools (2) are suspended in pivotal implement links (3). Between the implement links (3) and the main frame (1) a spring mechanism (4) is inserted, which makes an elastic tension of the implements (3) possible in both upwards and downwards direction in relation to the surface of the ground.

In this manner, the working depth of the implement can be adjusted to be either greater or less than the working depth that appears by means of the weight of the implement links. In transport position the leaf spring (5) operates as support member for the individual sections, and in this way the formerly used chains or locking mechanisms are rendered superfluous.

VOSSIUS · VOSSIUS · TAUCHNER · HEUNEMANN · RAUH

PATENTANWÄLTE

EUROPEAN PATENT ATTORNEYS

January 24, 1983

Our ref.: S 258 EP
Case:    316-53/LR
Flemstofte-Mads Amby Maskinfabriker A/S
Fuglejerg, Denmark

ELASTIC SUSPENSION OF SECTIONALIZED IMPLEMENTS FOR
TILLING THE SOIL.

TECHNICAL FIELD

The present invention relates to a sectionalized tool for
tilling the soil of the type which comprises a main frame
on which the implements are suspended in pivotal tool
links.

BACKGROUND ART

Formerly, it was a problem to guide the working depth of
tilling implements of a light construction.

In order to counteract dissimilar working depth, stones
and other heavy objects were formerly placed on the links
to increase the self-weight of the individual links.

DISCLOSURE OF THE INVENTION

The object of this invention is to provide a construction
in which weight is transferred in a controlled guided manner from the front frame of the implement to the implement link.

According to the invention, the above object is achieved
using an implement of the type mentioned in the introduction and characterized in that a spring mechanism is inserted between the main frame and the implement links,
thus making it possible to exert an elastic tensioning on
the implement links in upwards and downwards direction in

2

relation to the surface of the ground. The working depth is primarily adjusted by changing the main frame through adjustment of the three-point suspension of the tractor using the control handle. The finer adjustment is done by adjusting the spring tension. In case of heavy tilling equipment the tensioning may prevent too large working depth by deflecting the spring in a direction away from the surface of the ground.

In a preferred embodiment of the invention the spring mechanism is formed as a leaf spring extending at right angles to the main frame and arranged for coaction at its free end with a stepped rail at the rear part of the implement link.

In this manner, the spring tensioning can be adjusted in an extremely simple way, for instance, by placing bolts or the like in holes indicated by numbers. In transport position the spring acts as a support member for the individual sections. For this purpose it was formerly common to use chains or special welded locking mechanisms.

BRIEF DESCRIPTION OF THE DRAWINGS

The invention will be described more in detail in the following with reference to the drawing, in which

Fig. 1  shows an implement designed in accordance with the invention, viewed from the side, partly in section, and

Fig. 2  is a top view of the same.

DESCRIPTION OF THE PREFERRED EMBODIMENT

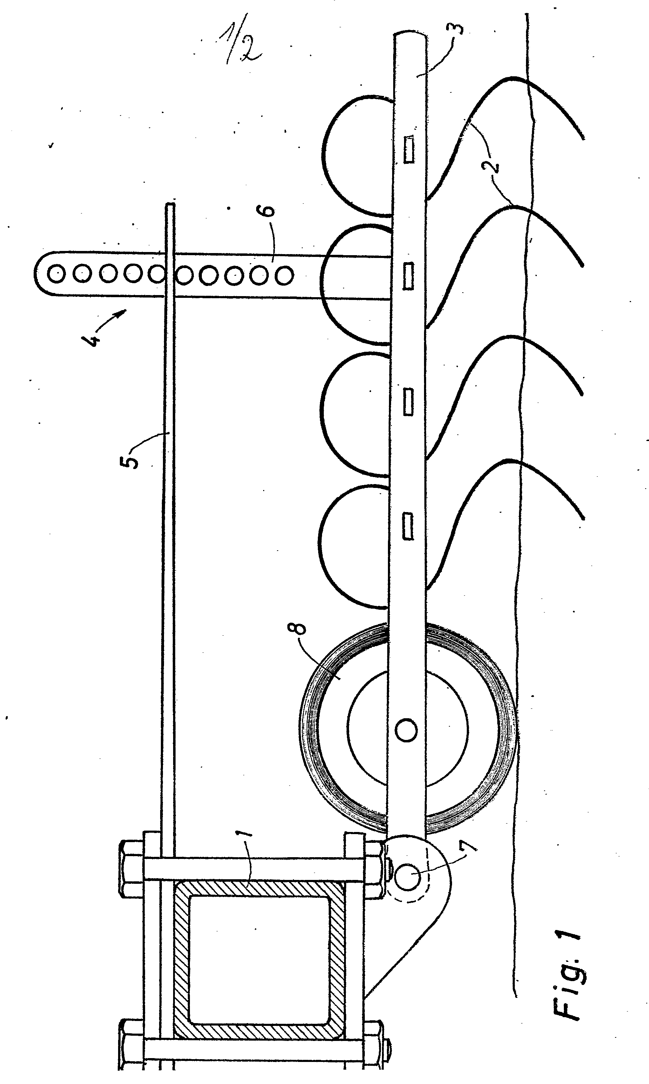

The implement shown  in figure 1 consists of a main frame 1 having an implement link 3 secured thereto in a manner known per se. The implement 3 is pivotal in re-

3

lation to the main frame by means of a pivot joint 7. When operating in the field, a support wheel 8 supports the implement link 3,and mainly S-shaped harrow tines 2 are mounted in the implement links.

A leaf spring 5 is attached to the main frame 1, said spring extending rearwards at right angles to the main frame 1 in relation to the direction of travel. The free end of said leaf spring 5 is arranged so that it can be placed between two bolts or pins led through corresponding holes in two rails provided with holes and placed at the rear end of the implement link.

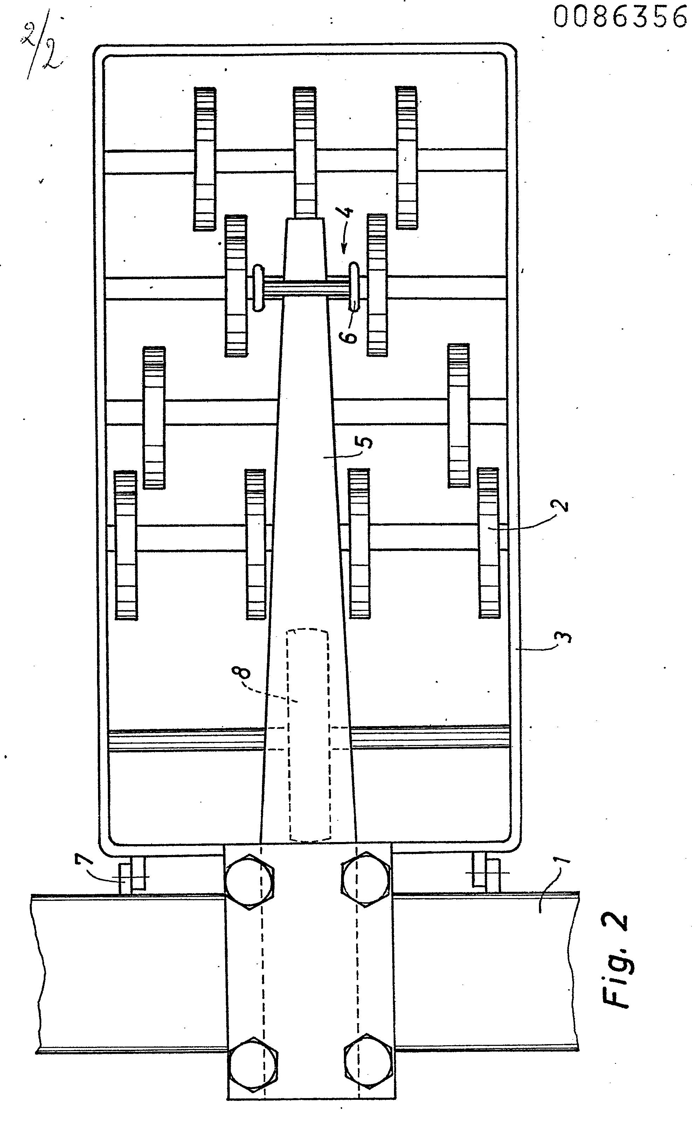

As it appears from figure 2, the leaf spring 5, in a preferred embodiment, may be tapered towards its free end.

0086356

4

1. A sectionalized implement used for the tilling of soil comprising a main frame (1) on which the tools are suspended in pivotal implement links (3) c h a r - a c t e r i z e d in that a spring mechanism (4) is inserted between the implement links (3) and the main frame (1), which mechanism makes it possible to exert an elastic tension of the implement links (3) in upwards and downwards direction in relation to the surface of the ground.

2. An implement according to claim 1, c h a r a c - t e r i z e d in that the spring mechanism (4) consists of a leaf spring (5) extending backwards at right angles to the main frame, said spring being arranged to coact with a stepped rail (6) placed at the rear part of the implement link (3).

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-2 964 114 (W.J. MELDAHL)<br>* Column 3, lines 10-71 ; figures 1, 2 * | 1 | A 01 B 35/12 |
| A | US-A-1 404 544 (H. RETTIG)<br>* Page 2, lines 12-70 ; figures 1-3 * | 1 | |
| A | DE-U-1 612 346 (P. BROHL)<br>* Claim 1 ; figure 1 * | 1 | |
| A | FR-A- 509 120 (J. BARY)<br>* Figures 1-3 * | 1 | |
| | ----- | | |

TECHNICAL FIELDS SEARCHED (Int. Cl. 3)

A 01 B 35/00

The present search report has been drawn up for all claims

| Place of search | Date of completion of the search | Examiner |
|---|---|---|
| BERLIN | 13-04-1983 | SCHOFER G |